# EUROPÄISCHE PATENTSCHRIFT

(11) **EP 0 624 391 B1**
(45) Veröffentlichungstag und Bekanntmachung des Hinweises auf die Patenterteilung: **16.07.1997**
(21) Anmeldenummer: 94106397.6
(22) Anmeldetag: 25.04.1994
(51) Int. Cl.: B01D 53/34, B05B 17/06

(54) **Verfahren und Vorrichtung zur Entstickung von Rauchgasen**
Process and device for the denitrification of flue gases
Procédé et dispositif our la dénitration de gaz de fumée

(30) Priorität: 08.05.1993 DE 4315385
(43) Veröffentlichungstag der Anmeldung: 17.11.1994
(73) Patentinhaber: BAYER AG, 51368 Leverkusen (DE)
(72) Erfinder: Lippmann, Alfred, Dipl.-Ing., D-41540 Dormagen (DE); Listner, Uwe, Dipl.-Ing., D-50354 Hürth (DE); Schweitzer, Martin, Dipl.-Ing., D-51519 Odenthal (DE)

(56) Entgegenhaltungen:
- EP-A- 0 326 943
- EP-A- 0 337 073
- WO-A-90/05000
- DE-C- 3 821 832
- GB-A- 2 096 911
- US-A- 4 205 786
- US-A- 4 241 877

## Beschreibung

Die Erfindung betrifft ein Verfahren zur selektiven nichtkatalytischen Reduktion von Stickoxiden in heißen Rauchgasen, bei dem in den Rauchgasstrom bei einer Temperatur von 800°C bis 1300°C mit Hilfe von Zweistoffdüsen ein flüssiges stickstoffhaltiges Reduktionsmittel eingedüst wird. Sie betrifft auch eine zur Durchführung des Verfahrens geeignete Vorrichtung. Die Reduzierung von Stickoxiden in Rauchgasströmen hinter Feuerungs- und Abfallverbrennungsanlagen ist ein hochaktuelles Problem, das in zahlreichen Veröffentlichungen behandelt wird. Eine zusammenfassende Darstellung findet sich z.B. in dem Buch von J. Kolar, Stickstoffoxide und Luftreinhaltung, Springer-Verlag, Berlin (1990).

Bei der selektiven nicht katalytischen Reduktion von Stickoxiden nutzt man die Reduktionseigenschaften von Ammoniak oder anderen stickstoffhaltigen Reduktionsmitteln, wie z.B. Harnstoff oder Melamin. Es handelt sich dabei um eine homogene Gasphasenreduktion, bei der molekularer Stickstoff, Wasser und Kohlendioxid entstehen. Um eine möglichst niedrige NOₓ-Reingaskonzentration zu erreichen, ist eine gleichmäßig gute Verteilung der Reduktionmittel im Gasstrom erforderlich. Theoretische Modellrechnungen lassen erkennen, daß man mit diesem Verfahren eine NOₓ-Reduzierung mit einem hohen Wirkungsgrad erreichen kann, der in der Praxis aber bisher nicht erreicht wurde.

Hier setzt die Erfindung an. Es lag die Aufgabe zugrunde, den Wirkungsgrad durch eine Optimierung der Eindüsung des Reduktionsmittels zu verbessern. Dabei kommt der Auswahl und der Konstruktion des Eindüssystems eine erhebliche Bedeutung zu.

Diese Aufgabe wird erfindungsgemäß dadurch gelöst, daß die zur Eindüsung verwendeten Zweistoffdüsen pulsierend mit einer Frequenz von 5 s⁻¹ bis 70 s⁻¹, vorzugsweise 10 s⁻¹ bis 20 s⁻¹ betrieben werden, wobei an jeder Zweistoffdüse im Wechseltakt ein Sprühkegel mit relativ groben Tropfen großer Reichweite und ein Sprühkegel mit relativ feinen Tropfen kleiner Reichweite erzeugt wird.

Bisher wurde versucht die Flüssigkeit sehr fein zu zerstäuben und damit eine sehr große Tropfenoberfläche zu erzeugen. Bei der erfindungsgemäßen pulsierenden Verdüsung wird dagegen ein sehr breites Tropfspektrum erzeugt, wobei die groben Tropfen besonders weit in das ruhende oder strömende Rauchgas eindringen. Auf diese Weise erreicht man, daß der Querschnitt des Rauchgaskanals gleichmäßig mit dem aus den Tropfen gebildeten Dampf beaufschlagt wird, wobei im Nahbereich der Zweistoffdüsen der Feinsprüh und in den weiter entfernt liegenden Zonen, der mit hoher Abfluggeschwindigkeit und dementsprechend großer Wurfweite erzeugte Grobsprüh verdampft wird. Der periodisch pulsierende Wechsel von grobem Einstoffsprüh und feinem, von dem expandierenden Druckmedium zerrissenen Zweistoffsprüh, wird im folgenden als "Hybridzerstäubung" bezeichnet. Überraschenderweise gelingt es mit diesem Verfahren den Wirkungsgrad für die NOₓ-Eliminierung auf 95 % bis 99 % zu steigern. Insbesondere konnte auch Lachgas (NO) nahezu quantitativ aus dem Rauchgasstrom entfernt werden.

Besonders hohe NOₓ-Abscheidegrade kann man erreichen, wenn als flüssiges Reduktionsmittel in Wasser gelöster Ammoniak (Ammoniakwasser) verwendet wird und die Eindüsung bei Rauchgastemperaturen von 1060° bis 1170°C erfolgt. Bei Über- oder Unterschreitung dieses Temperaturfensters sinkt die Eliminierungsrate.

Vorzugsweise wird der Druckluft- und Flüssigkeitsdurchsatz so eingestellt, daß das zeitlich gemittelte Mengenstromverhältnis Luft- zu Flüssigkeitsstrom an jeder Zweistoffdüse bei einem Wert im Bereich von 0,01 bis 0,2 liegt, während der Momentanwert des Mengenstromverhältnisses entsprechend dem pulsierenden Betrieb der Zweistoffdüsen zwischen einem oberen und einem unteren Extremwert schwankt.

Der pulsierende Betrieb kann dadurch realisiert werden, daß die Zweistoffdüsen periodisch mit Luft oder Flüssigkeit beaufschlagt werden. Zu diesem Zweck wird die Druckluft- oder Flüssigkeitszuführung periodisch unterbrochen.

Gemäß einer bevorzugten Ausführungsform wird jedoch der pulsierende Betrieb bei zeitlich konstanter Beaufschlagung mit Druckluft und Flüssigkeit aufgrund periodischer Anlaufvorgänge in der Zweistoffdüse selbst erzeugt (Autopulsationsbetrieb).

Zur Durchführung dieses Verfahrens werden Zweistoffdüsenlanzen verwendet, bei denen die Flüssigkeits- und Gaszuführung mit einer ersten, in der Zweistoffdüse angeordneten Resonanzkammer verbunden sind, der mindestens eine weitere von der ersten Resonanzkammer durch eine Blende getrennte Resonanzkammer nachgeschaltet ist. Die in Strömungsrichtung gesehen letzte Resonanzkammer ist dann unmittelbar mit der Austrittsöffnung der Zweistoffdüse verbunden.

Vorteilhaft sind die in die erste Resonanzkammer einmündenden Zuleitungen für das Druckmedium und die Flüssigkeit so ausgebildet, daß die beiden Phasen weitgehend ohne Vermischung in die erste Resonanzkammer gefördert werden.

Zu diesem Zweck wird eine Zweistoffdüse verwendet, bei der die Zuleitung für die Flüssigkeit aus einem koaxial in einem Hüllrohr angeordnetem, mit Hilfe von Segmentstegen zentrierten Innenrohr und die Zuführung für das Druckmedium aus dem zwischen dem Hüllrohr und dem Innenrohr verbleibendem Ringspalt besteht. Außerdem weist bei dieser Ausführung das Innenrohr an einem stirnseitig geschlossenen Verteiler senkrecht zur Düsenachse orientierte, gleichmäßig über den Umfang verteilte Austritts-Bohrungen auf, die in Strömungsrichtung gesehen im Totraum hinter den im Ringspaltquerschnitt angeordeneten Segmentstegen angeordnet sind. Die Austrittsbohrungen liegen also in axialer Verlängerung der Segementstege.

Gemäß einer Weiterentwicklung der Erfindung ist das Volumen der ersten, mit den Zuführungen für Druckluft und Flüssigkeit verbundenen Resonanzkammer einstellbar. Es wurde gefunden, daß man auf diese Weise die Pulsationsfrequenz variieren und damit einstellen kann.

Praktisch geht man dabei so vor, daß das Innenrohr mit dem Verteiler axial verschiebbar im Hüllrohr angeordnet wird, sodaß die Länge der ersten Resonanzkammer einstellbar ist.

Die Düsen sind vorteilhaft als Flachstrahldüsen ausgebildet.

Mit der Erfindung werden folgende Vorteile erzielt:
- Im Vergleich zu den bisher bekannten katalysefreien Rauchgas-Entstickungsverfahren werden deutlich bessere NOₓ-Abscheidegrade (95 % bis 99 %) auch beim Einsatz in relativ großen Rauchgasquerschnitten erzielt. Langzeitversuche haben gezeigt, daß diese hohen Abscheidegrade auch über große Zeiträume hinweg sicher eingehalten werden können.
- Aufgrund der besseren Verteilung der Denoxierungsflüssigkeit (flüssiges Reduktionsmittel) im Rauchgas, kommt man mit einer gringeren Anzahl von Zweistoffdüsen aus (niedrigere Investitionskosten). Außerdem sind für den Betrieb der Zweistoffdüsen geringere Mengen von Zerstäubergas (Druckmedium) erforderlich, sodaß grundsätzlich auch die Betriebskosten gesenkt werden können.
- Es werden nur äußerst geringe Mengen von schädlichen Nebenprodukten, wie Lachgas und Kohlenmonoxid erzeugt.
- Außerdem erfolgt ein effizienter Ausbrand von überschüssigem Ammoniak, sodaß bei Anwesenheit von Chlorwasserstoff und Schwefeldioxid nahezu keine Ammoniumsalze im Wasserablauf einer naßen Rauchgaswäsche gefunden werden.
- Die Pulsationsdüsen weisen auch nach längerem Einsatz keinerlei Verschleiß und keine Korrosion auf. Sie haben sich auch nicht verformt und nicht zugesetzt.
- Bereits bestehende Verfahren und Anlagen können ohne Schwierigkeiten auf das erfindungsgemäße Verfahren umgerüstet werden. Eine entsprechende Nachrüstung der Anlagen ist mit einem relativ geringen Kostenaufwand möglich.

Im folgenden wird die Erfindung anhand von Zeichnungen und Ausführungsbeispielen näher beschrieben. Es zeigen
- Fig. 1: schematisch einen Querschnitt durch eine Nachbrennkammer mit daran anschließendem Rauchgaskanal,
- Fig. 2: einen Schnitt A-D gemäß Figur 1, aus dem insbesondere die Plazierung der Düsenlanzen im Rauchgaskanal ersichtlich ist,
- Fig. 3: den Aufbau einer Pulsationsdüse mit Resonanzkammern,
- Fig. 4: einen Querschnitt A-D durch die Pulsationsdüse gemäß Fig. 3,
- Fig. 5: den Momentanwert des Mengenstromverhältnisses des Luft- und Flüssigkeitsstroms bei pulsierendem Betrieb der Zweistoffdüse,
- Fig. 6: die Abhängigkeit der Pulsationsfrequenz von der Länge der ersten Resonanzkammer in der Zweistoffdüse,
- Fig. 7: die als Funktion der Zeit gemessenen NOₓ-Rohgas- und Reingaskonzentrationen bei einem Probelauf.

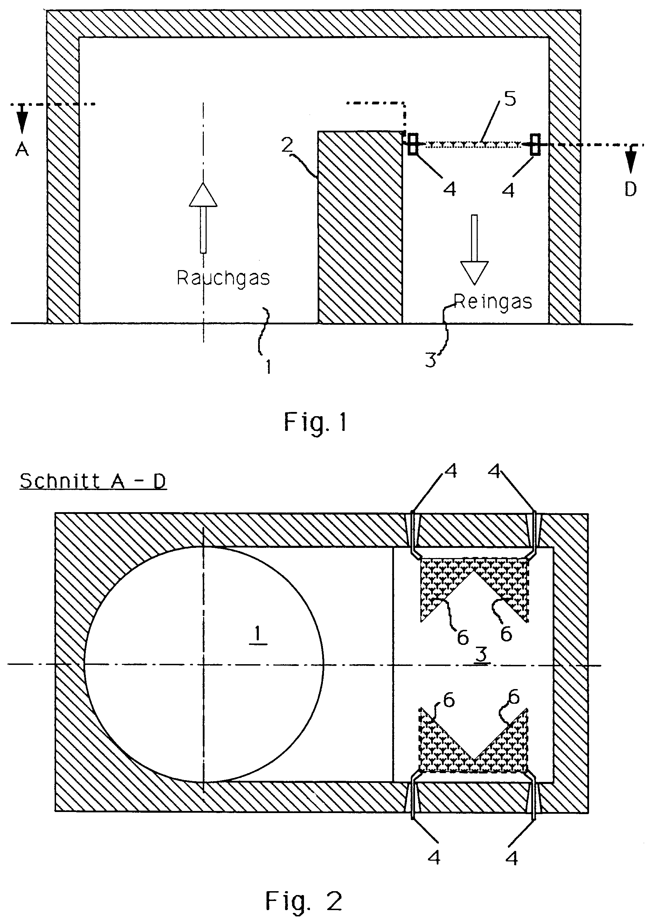

Das zu entstickende, von einer Verbrennungsanlage kommende Rauchgas strömt gemäß den Figuren 1 und 2 durch eine zylindrische Nachbrennkammer 1 über das Joch 2 in den Rauchgaskanal 3, der hier als Kesselzug ausgebildet ist. In den vier Ecken-nahen Schauluken des Kesselzugs oder Rauchgaskanals 3 ist je eine Düsenlanze 4 installiert (s. Fig. 2). Die Eindüsebene ist mit 5 bezeichnet (s. Fig. 1). Eine Düsenlanze 4 besteht jeweils aus einer Zweistoffdüse mit Zuführungen für das zu verdüsende flüssige Reduktionsmittel (Denoxierungsmittel) und das für die Zerstäubung erforderliche Druckmedium, z.B. Preßluft. Die Zweistoffdüsen erzeugen jeweils einen Sprühkegel oder Sprühfächer 6, der in Fig. 2 aus Gründen der Übersichtlichkeit nur in den Ecken dargestellt ist. In Wirklichkeit durchdringen sich die Sprühfächer 6 gegenseitig, sodaß der gesamte Querschnitt des Rauchgaskanals 3 überdeckt wird.

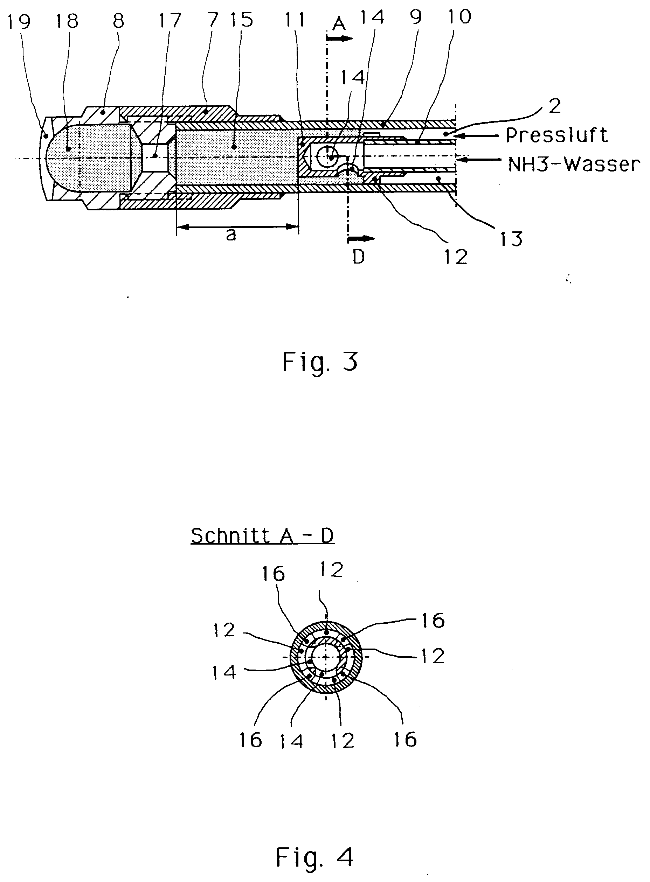

Anhand der Figuren 3 und 4 wird die Konstruktion der hier verwendeten speziellen Pulsationsdüse beschrieben. Die Pulsationsdüse bildet den Vorderteil der in den Figuren 1 und 2 dargestellte Düsenlanze 4 und besteht gemäß Fig. 3 und Fig. 4 aus einer in einer Anschweißmuffe 7 eingeschraubten handelsüblichen Flachstrahldüse 8, einem mit der Anschweißmuffe 7 fest verbundenem Hüllrohr 9, einem im Hüllrohr axial verschiebbaren Innenrohr 10, sowie einem am Innenrohr angebrachten Flüssigkeitsverteiler 11. Das Innenrohr 10 mit dem aufgesetzten Flüssigkeitsverteiler 11 ist über Zentrierstege 12 axial verschiebbar im Hüllrohr 9 gelagert. Die erforderliche Abdichtung des verschiebaren Innenrohres 10 gegenüber dem Hüllrohr 9 ist hier nicht dargestellt.

Durch das Innenrohr 10 strömt das zu verdüsende flüssige Reduktionsmittel (z.B. Ammoniakwasser) und durch den Ringspalt 13 zwischen dem Innenrohr 10 und dem Hüllrohr 9 Preßluft als gasförmiges Zerstäubermedium. Der Flüssigkeitsverteiler 11 besteht aus einem stirnseitig abgeschlossenen, auf das Innenrohr 10 aufgesetzten Rohrstück mit senkrecht zur Achse orientierten, gegeneinander versetzten Austrittbohrungen 14. Das Ammoniakwasser tritt aus dem Innenrohr 10 durch die Austrittsbohrungen 14 in eine an den Verteiler 11 anschließende erste Resonanzkammer 15 ein, während die Preßluft über den Ringspalt zwischen Innenrohr 10 und Hüllrohr 9 zugeführt wird. Die Preßluft strömt dabei durch die nutartigen Freiflächen 16 (s. Fig. 4) zwischen den Zentrierstegen 12. Die Austrittsbohrungen 14 sind im Verteiler 11 so angebracht, daß sie jeweils in axialer Verlängerung der den Ringspaltquerschnitt partiell verschließenden Zentriersegmente 12 liegen; d.h. die Austrittsbohrungen 14 liegen im Totraum bzw. im Strömungsschatten hinter den Zentrierstegen 12. Auf diese Weise wird eine Vermischung der flüssigen Phase (Ammoniak) und der gasförmigen Phase (Preßluft) vor Erreichen der Resonanzkammer 15 weitgehend ausgeschlossen.

Die Resonanzkammer 15 wird längsseitig durch das Hüllrohr 9, stirnseitig am Eintritt durch den Flüssigkeitsverteiler 11 und am Austritt durch eine Drossel oder Blende 17 mit einem gegenüber dem Innendurchmesser der Resonanzkammer 15 stark verminderten Querschnitt begrenzt. Bei einer Verschiebung des Innenrohrs 10 im Hüllrohr 9 ändert sich die effektive Länge a und damit auch das Volumen der Resonanzkammer 15.

An die Drossel 17 schließt sich eine weitere (hier die letzte) Resonanzkammer 18 an. Durch die eigentliche Düsenöffnung am Düsenkopf, die hier als schmaler rechteckförmiger Schlitz 19 ausgebildet ist, tritt das in der zweiten (letzten) Resonanzkammer 18 befindliche zweiphasige Gemisch Preßluft/Ammoniakwasser in den Rauchgaskanal ein. Die zweite Resonanzkammer 18 kann daher auch als Verdüsungskammer angesehen werden. Grundsätzlich könnten auch mehr als zwei Resonanzkammern hintereinander geschaltet werden, die jeweils durch Blenden bzw. Drosseln voneinander getrennt sind.

Es hat sich gezeigt, daß beim Betrieb dieser Zweistrahldüse mit konstantem Preßluft- und Ammoniakwasservordruck ein pulsierender Ausstoß der Flüssigkeit erfolgt, wobei die Pulsationsfrequenz über das Volumen der Resonanzkammer 15 eingestellt werden kann und in einem typischen Frequenzbereich von 5 s⁻¹ bis 70 s⁻¹ liegt. Untersuchungen haben gezeigt, daß bei einem solchen pulsierenden Betrieb an jeder Zweistoffdüse im Wechseltakt ein Sprühfächer mit relativ groben Tropfen großer Reichweite und ein Sprühfächer mit relativ feinen Tropfen kleiner Reichweite erzeugt wird. Die Pulsationsfrequenzen der Düsenlanzen 4 können dabei unterschiedlich sein. Die relativ groben Tropfen kommen dadurch zustande, daß in dieser Phase praktisch ein reiner Flüssigkeitsausstoß erfolgt, während die in der darauffolgenden Feinsprühphase erzeugten wesentlich kleineren Tropfen auf die Zerstäubung durch die expandierende Preßluft zurückzuführen sind. Bei dieser Hybridzerstäubung wird ein sehr breites Tropfenspektrum erzeugt, wobei sich die groben Tropfen durch eine besonders große Wurfweite auszeichnen. Dabei wird ein besonders gleichmäßiger und guter Wärme- und Stoffaustausch zwischen wenig Flüssigkeit und einer relativ großen Gasmenge erreicht Die Verdüsung findet bei einem Vordruck von 0,8 bis 2,5 bar und bei einem Mengenstromverhältnis Druckluft/Flüssigkeit zwischen 0,01 und 0,2 statt.

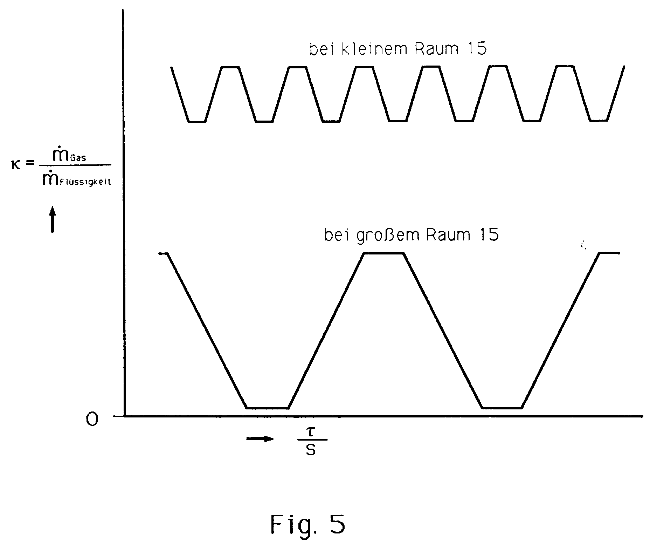

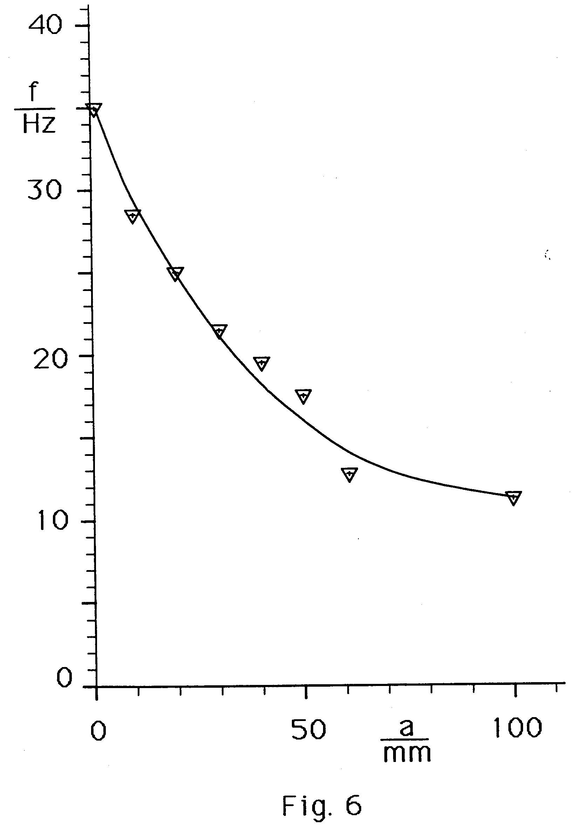

In dem Diagramm nach Fig. 5 ist der Momentanwert K des Mengenstromverhältnisses bei einem pulsierenden Betrieb der Zweistoffdüse gemäß Fig. 3 als Funktion der Zeit aufgetragen. Durch die Drossel 17 strömen in einem Extremfall abwechselnd Flüssigkeit und Druckluft, während sich im anderen Extremfall das Mengenstromverhältnis K der gleichzeitig durch die Drosselstelle strömenden gasförmigen und flüssigen Phase praktisch nicht ändert. Aus dem Verdüsungsraum 18 (letzte Resonanzkammer) tritt das Flüssigkeits-Gasgemisch in periodisch veränderliche Zusammensetzung durch die Flachstrahldüsenaustrittsfläche 19 in den Rauchgaskanal ein. Wie in Fig. 5 dargestellt, strebt das Mengenstromverhältnis K von einem oberen Grenzwert - das entspricht einem hohen Anteil von gasförmigen Zerstäubungsmedium an der gesamten durch den Düsenschlitz 19 strömenden Masse - einem unteren Grenzwert zu, um danach wieder auf den Höchstwert anzusteigen. Der obere Grenzwert entspricht dem Zustand der Feinzerstäubung mit geringer Reichweite und der untere Grenzwert der Bildung von groben Tropfen mit großer Reichweite. Dieser Vorgang wiederholt sich periodisch. Die Wiederholfrequenz oder Pulsationsfrequenz kann durch Vergrößerung oder Verkleinerung des Volumens der Resonanzkammer 15 gezielt verändert werden. Wird das Volumen z.B. durch Vergrößerung des Abstandes a vergrößert, so erniedrigt sich die Frequenz (unteres Teilbild in Fig. 5), während sich bei Verkleinerung des Volumens die Pulsationsfrequenz erhöht (oberes Teilbild in Fig. 5). Die an einer Zweistoffdüse gemäß Fig. 3 und Fig. 4 gemessene Abhängigkeit der Pulsationsfrequenz von der Länge a der Resonanzkammer 15 ist in Fig. 6 dargestellt. Das Volumen der Resonanzkammer 15 könnte auch dadurch verändert werden, daß Nebenkammern vorgesehen sind, die bei Bedarf zugeschaltet werden.

Der Pulsationsbetrieb stellt sich bei der oben beschriebenen Resonanzkammer-Zweistoffdüse von selbst ein (Autopulsation). Anstelle des Autopulsations-Betriebes kann auch eine erzwungene Pulsation herbei geführt werden, wenn eine Zweistoffdüse periodisch mit Druckluft oder Flüssigkeit beaufschlagt wird. Dies kann z.B. durch sogenannte Flatterventile geschehen, die in die Zuleitungen für die Preßluft oder die Flüssigkeit eingebaut sind.

### Beispiel

Im folgenden wird ein Ausführungsbeispiel für die Entstickung eines Rauchgasstromes unter Verwendung der beschriebenen Autopulsations-Zweistoffdüsen beschrieben. In einer Verbrennungsanlage gelangen ca. 80 000 m³/h Rauchgas aus einer zylindrischen Nachbrennkammer 1 (s. Fig. 1) über das Joch 2 in den als "Rauchgaskanal" bezeichneten Kesselzug 3, in dessen Ecken die mit Autopulsationsdüsen bestückten Düsenlanzen 4 angeordnet sind. In der Nachbrennkammer 1 herrschte eine Temperatur von 1100°C. Die Rauchgastemperatur in der Höhe der Eindüsebene 5 lag um 50°C bis 90°C niedriger. Durch jede Düsenlanze wurde 230 l/h 25 %iges Ammoniakwasser als Denoxierungsmittel in den Rauchgaskanal 3 eingedüst. Der Düsenvordruck betrug 1,7 bar (sowohl für die Verdüsungsluft als auch für das Ammoniakwasser), das Massenverhältnis der beiden Komponenten 0,026. Die Pulsationsfrequenz lag bei 17 s⁻¹.

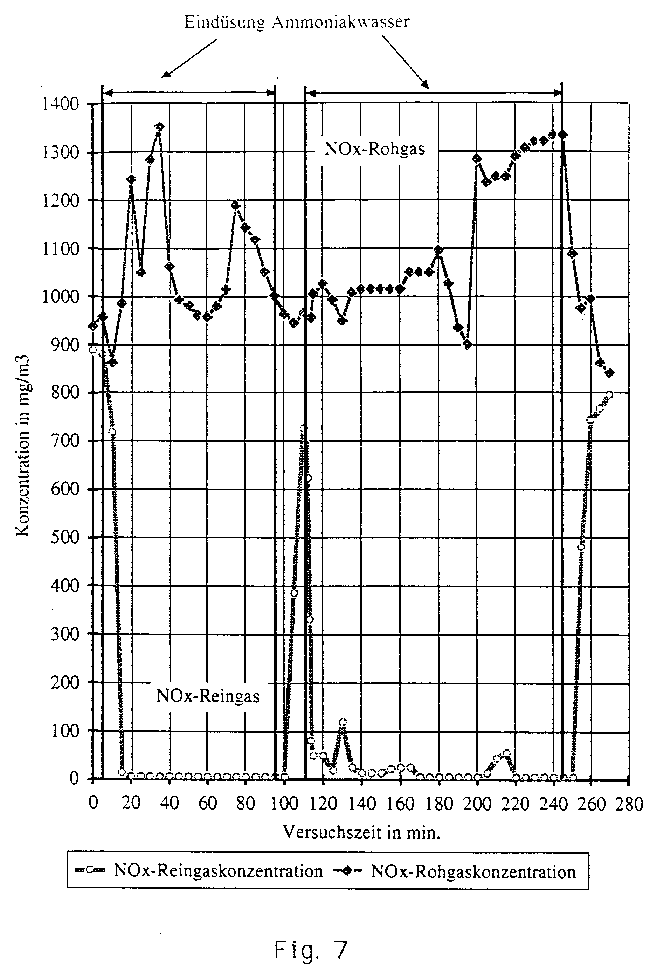

In Fig. 7 sind die unter diesen Voraussetzungen gewonnenen Versuchsergebnisse dargestellt, Das Diagramm zeigt während eines Versuchszeitraums von 270 min den NOₓ-Verlauf im Roh- und Reingas. Die NOₓ-Rohgaskonzentrationen wurden in der Nachbrennkammer 1, die NOₓ-Reingaskonzentrationen im Rauchgaskanal 3 stromabwärts der Düsenlanzen 4 mit einem NOₓ-Analysator der Fa. Rosemount gemessen. Bei Eindüsung von Ammoniakwasser unter den oben angegebenen Bedingungen im Autopulsationsbetrieb wurde die NOₓ-Konzentration von maximal 1.350 mg/m³ auf einen Restwert Kleiner 10 mg/m³ im Reingas reduziert. Bei Unterbrechung der Eindüsung (nach ca. 100 min) stieg die NOₓ-Konzentration wieder auf 800 mg/m³ an. Bei erneuter Zugabe des Denoxierungsmittels (nach ca. 110 min) fiel die NOₓ-Reingaskonzentration wieder unter 10 mg/m³. Damit ergab sich bei dem erfindungsgemäßen Entstickungsverfahren ein Abscheidegrad von über 98 %.

## Patentansprüche

1. Verfahren zur selektiven nichtkatalytischen Reduktion von Stickoxiden in heißen Rauchgasen, bei dem in den Rauchgasstrom bei einer Temperatur von 800°C-1300°C mit Hilfe von Zweistoffdüsenlanzen (4) ein flüssiges stickstoffhaltiges Reduktionsmittel eingedüst wird, dadurch gekennzeichnet, daß die Zweistoffdüsen pulsierend mit einer Frequenz von 5 bis 70 s⁻¹, vorzugsweise 10 bis 20 s⁻¹ betrieben werden, wobei an jeder Zweistoffdüse im Wechseltakt ein Sprühkegel (6) mit relativ groben Tropfen großer Reichweite und ein Sprühkegel mit relativ feinen Tropfen kleiner Reichweite erzeugt wird.

2. Verfahren nach Anspruch 1, dadurch gekennzeichnet, daß als flüssiges Reduktionsmittel, vorzugsweise bei Rauchgastemperaturen von 1060° bis 1140°C, in Wasser gelöster Ammoniak d.h. Ammoniakwasser verwendet wird.

3. Verfahren nach Anspruch 1 bis 2, dadurch gekennzeichnet, daß der Druckluft-und Flüssigkeitsdurchsatz so eingestellt wird, daß das zeitlich gemittelte Mengenstromverhältnis Luftstrom zu Flüssigkeitsstrom an jeder Zweistoffdüse im Bereich von 0,01 - 0,2 liegt, während der Momentanwert des Mengenstromverhältnisses mit der gleichen Pulsationsfrequenz zwischen zwei Extremwerten schwankt.

4. Verfahren nach Anspruch 1 bis 3, dadurch gekennzeichnet, daß der pulsierende Betrieb durch eine periodische Beaufschlagung der Zweistoffdüse mit Druckluft oder Flüssigkeit erfolgt.

5. Verfahren nach Anspruch 1 bis 3, dadurch gekennzeichnet, daß der pulsierende Betrieb bei zeitlich konstanter Beaufschlagung mit Druckluft und Flüssigkeit in der Zweistoffdüse selbst erzeugt wird.

6. Vorrichtung zur Durchführung des Verfahrens nach Anspruch 5, bestehend aus einem Rauchgaskanal (3), in dem mehrere, mit einem Druckmedium betriebene Zweistoffdüsenlanzen (4) mit Flüssigkeits- und Druckgaszuführungen eingebaut sind, dadurch gekennzeichnet, daß die Flüssigkeits- und Druckgaszuführung mit einer ersten, in der Zweistoffdüse angeordneten Resonanzkammer (15) verbunden sind, der mindestens eine weitere, von der ersten Resonanzkammer (15) durch eine Blende (17) getrennte Resonanzkammer (18) nachgeschaltet ist und daß die in Strömungsrichtung gesehen letzte Resonanzkammer (18) unmittelbar mit der Austrittsöffnung (19) der Zweistoffdüse verbunden ist.

7. Vorrichtung nach Anspruch 6, dadurch gekennzeichnet, daß die in die erste Resonanzkammer (15) einmündenden Zuleitungen für das Druckmedium und die Flüssigkeit so ausgebildet sind, daß die beiden Phasen weitgehend ohne Vermischung in die erste Resonanzkammer (15) gefördert werden.

8. Vorrichtung nach Anspruch 7, dadurch gekennzeichnet, daß die Zuleitung für die Flüssigkeit aus einem koaxial in einem Hüllrohr (9) angeordneten, mit Hilfe von Segementstangen (12) zentrierten Innenrohr (19) und die Zuführung für das Druckmedium aus dem zwischen dem Hüllrohr (9) und dem Innenrohr (10) verbleibendem Ringspalt (13) besteht und daß das Innenrohr (10) an einem stirnseitig abgeschlossenen Verteiler (11) senkrecht zur Düsenachse orientierte, gleichmäßig über den Umfang verteilte Austritts-Bohrungen (14) aufweist, die in Strömungsrichtung gesehen im Totraum hinter den Ringspaltquerschnitt partiell verschließenden Sementstangen (12) angeordnet sind.

9. Vorrichtung nach Anspruch 5 bis 8, dadurch gekennzeichnet, daß das Volumen der ersten Resonanzkammer (15) einstellbar ist.

10. Vorrichtung nach Anspruch 9, dadurch gekennzeichnet, daß das Innenrohr (10) mit dem Verteiler (11) axial verschiebbar im Hüllrohr (9) angeordnet ist, sodaß die Länge (a) der ersten Resonanzkammer (15) einstellbar ist.

11. Vorrichtung nach Anspruch 5 bis 10, dadurch gekennzeichnet, daß die Düse als Flachstrahldüse ausgebildet ist.

## Claims

1. Process for the selective non-catalytic reduction of nitrogen oxides in hot flue gases, in which a liquid reducing agent which contains nitrogen is injected into the flue gas stream at a temperature of from 800 to 1300°C with the aid of two-fluid nozzle lances (4), characterised in that the two-fluid nozzles are operated in pulsating manner at a frequency of from 5 to 70 s⁻¹, preferably from 10 to 20 s⁻¹, wherein there is generated at each two-fluid nozzle alternately an atomising cone (6) having relatively coarse droplets of a long range and an atomising cone having relatively fine droplets of a short range.

2. Process according to Claim 1, characterised in that ammonia dissolved in water (that is to say, ammoniacal liquor) is used as the liquid reducing agent, preferably at flue gas temperatures of from 1060 to 1140°C.

3. Process according to Claims 1 to 2, characterised in that the throughput of compressed air and liquid is adjusted such that the mass flux ratio of the air stream to the liquid stream, averaged out over time, is within the range 0.01 to 0.2 at each two-fluid nozzle, while the transient value of the mass flux ratio fluctuates between two extreme values at the same frequency of pulsation.

4. Process according to Claims 1 to 3, characterised in that the pulsating operation takes place as a result of impinging compressed air or liquid in periodic manner on the two-fluid nozzle.

5. Process according to Claims 1 to 3, characterised in that the pulsating operation is generated within the two-fluid nozzle itself with compressed air and liquid impinging in a manner which is constant as to time.

6. Device for carrying out the process according to Claim 5, comprising a flue gas duct (3) in which there is installed a plurality of two-fluid nozzle lances (4) operated with a compressed medium and having liquid and compressed gas supplies, characterised in that the liquid supply and compressed gas supply are connected to a first resonance chamber (15) which is disposed in the two-fluid nozzle and downstream whereof there is installed a further resonance chamber (18) which is separated from the first resonance chamber (15) by an orifice (17), and that the final resonance chamber (18), viewed in the direction of flow, is connected directly to the outlet opening (19) of the two-fluid nozzle.

7. Device according to Claim 6, characterised in that the feed lines for the compressed medium and the fluid, which open into the first resonance chamber (15), are embodied such that the two phases are conveyed into the first resonance chamber (15) largely without intermixing.

8. Device according to Claim 7, characterised in that the feed line for the liquid comprises an inner pipe (10) which is disposed in coaxial manner, and is centred with the aid of segmental rods (12), within an enclosing pipe (9), and the supply for the compressed medium comprises the annular gap (13) remaining between the enclosing pipe (9) and the inner pipe (10), and that the inner pipe (10) has a distributor (11) which is sealed on the face, drilled outlet holes (14) which are oriented perpendicularly to the nozzle axis and are distributed in uniform manner over the periphery and which, viewed in the direction of flow, are disposed in the dead space behind segmental rods (12) which partially close the annular gap cross-section.

9. Device according to Claims 5 to 8, characterised in that the volume of the first resonance chamber (15) is adjustable.

10. Device according to Claim 9, characterised in that the inner pipe (10) having the distributor (11) is disposed such as to be axially displaceable within the enclosing pipe (9), such that the length (a) of the first resonance chamber (15) is adjustable.

11. Device according to Claims 5 to 10, characterised in that the nozzle is embodied as a flat jet nozzle.

## Revendications

1. Procédé de réduction non catalysée sélectif d'oxydes d'azote dans des fumées très chaudes, où on ajoute dans le courant de fumée à une température de 800-1 300°C à l'aide de lances de buse bicomposant (4) un réducteur liquide contenant de l'azote, caractérisé en ce que les buses bicomposant fonctionnent en pulsations à une fréquence de 5 à 70 s⁻¹, de préférence 10 à 20 s⁻¹, où chaque buse bicomposant produit alternativement un cône de pulvérisation (6) avec des gouttes relativement grosses de grande portée et un cône de pulvérisation avec des petites gouttes de faible portée.

2. Procédé selon la revendication 1, caractérisé en ce qu'on utilise comme réducteur liquide, de préférence à des températures de fumée de 1 060 à 1 140°C, de l'ammoniac dissous dans l'eau, c'est-à-dire de l'eau ammoniaquée.

3. Procédé selon les revendications 1 à 2, caractérisé en ce qu'on ajuste le débit d'air comprimé et de liquide de telle façon que le rapport de débit moyen dans le temps du débit d'air au débit de liquide dans chaque buse bicomposant se trouve dans le domaine de 0,01-0,2, tandis que la valeur instantanée du rapport des débits varie entre les deux valeurs extrêmes à la même fréquence de pulsation.

4. Procédé selon les revendications 1 à 3, caractérisé en ce que le régime de pulsation est produit par une charge périodique de la buse bicomposant avec de l'air comprimé ou du liquide.

5. Procédé selon les revendications 1 à 3, caractérisé en ce que le régime de pulsation s'établit de lui-même par la charge constante en fonction du temps de l'air comprimé et du liquide dans la buse bicomposant.

6. Dispositif de réalisation du procédé selon la revendication 5, constitué d'un canal de fumée (3), dans lequel on implante plusieurs lances de buse bicomposant (4) actionnées par un milieu sous pression avec des arrivées de liquides et de gaz sous pression, caractérisé en ce que les conduites d'arrivée de liquide et de gaz comprimé sont reliées à une première chambre de résonance (15) implantée dans la buse bicomposant, à laquelle succède au moins une autre chambre de résonance (18) séparée de la première chambre de résonance (15) par un diaphragme (17) et que vu dans le sens de l'écoulement, la dernière chambre de résonance (18) est reliée directement à l'orifice de sortie (19) de la buse bicomposant.

7. Dispositif selon la revendication 6, caractérisé en ce que les conduites débouchant dans la première chambre de résonance (15) du milieu sous pression et du liquide sont réalisées de telle façon que les deux phases sont refoulées pratiquement sans mélange dans la première chambre de résonance (15).

8. Dispositif selon la revendication 7, caractérisé en ce que la conduite du liquide est constituée d'un tube interne (19) centré à l'aide de pattes de segment (12) disposé coaxialement dans un tube gaine (9) et que l'arrivée du milieu sous pression est constituée du jeu annulaire (13) restant entre le tube gaine (9) et le tube interne (10) et que le tube interne (10) présente sur un distributeur (11) obturé frontalement perpendiculaire à l'axe de buse des orifices de sortie (14) répartis et dirigés régulièrement à la périphérie, qui sont disposés, vus dans le sens de l'écoulement, dans l'espace mort en arrière des pattes de segment (12) obturant partiellement la section de jeu annulaire.

9. Dispositif selon les revendications 5 à 8, caractérisé en ce qu'on peut régler le volume de la première chambre de résonance (15).

10. Dispositif selon la revendication 9, caractérisé en ce que le tube interne (10) avec le distributeur (11) sont disposés en coulissement axial dans le tube gaine (9), de sorte qu'on peut régler la longueur (a) de la première chambre de résonance (15).

11. Dispositif selon les revendications 5 à 10, caractérisé en ce que la buse est une buse à jet plat.
